# EUROPEAN PATENT APPLICATION

(11) **EP 4 571 126 A1**
(43) Date of publication of application: **18.06.2025**
(21) Application number: 24188260.4
(22) Date of filing: 12.07.2024
(51) Int. Cl.: F16B 5/02, F16B 41/00

(54) **SYSTEM FOR CONNECTING**

(30) Priority: 12.12.2023 EP 23215976
(71) Applicant: MoldTecs-01-2022 GmbH, 38667 Bad Harzburg (DE)
(72) Inventor: Foulboeuf, Gwénaël, 53260 Entrammes (FR); Trotin, Philippe, 53360 Quelaines Saint Gault (FR)
(74) Representative: STT Sozietät Thews & Thews

(57) **Abstract**

The invention relates to a system for connecting an add-on part 2 to a component 3 and for pre-assembling the add-on part 2, comprising a bolt 4 for connecting and a retainer 1 for captively fastening the bolt 4 with a bolt axis 4.1 to an opening 2.1 of the add-on part 2, wherein the bolt 4 is assembled with the retainer 1 in such a way that the bolt 4 is aligned in an essentially coaxial position with a centre axis X of the opening 2.1. The system should be used for a variety of different constructions and should be simpler. The retainer 1 is deformable in such a way that the bolt 4 can be pivoted from a pre-assembled position about a pivot axis Y into a position set at an angle α to the centre axis X and/or the bolt 4 can be moved in parallel to the pre-assembled position.

## Description

### TECHNICAL FIELD

The invention relates to a system for connecting an add-on part to a component and for pre-assembling the add-on part captive, comprising a bolt for connecting and a retainer for captively fastening the bolt in and/or in front of an opening of the add-on part. The bolt with a bolt axis is assembled with the retainer in such a way that the bolt is alignable in an essentially coaxial position with a centre axis X of the opening. So, the bolt only needs to be screwed into the component when assembling the add-on part.

### BACKGROUND

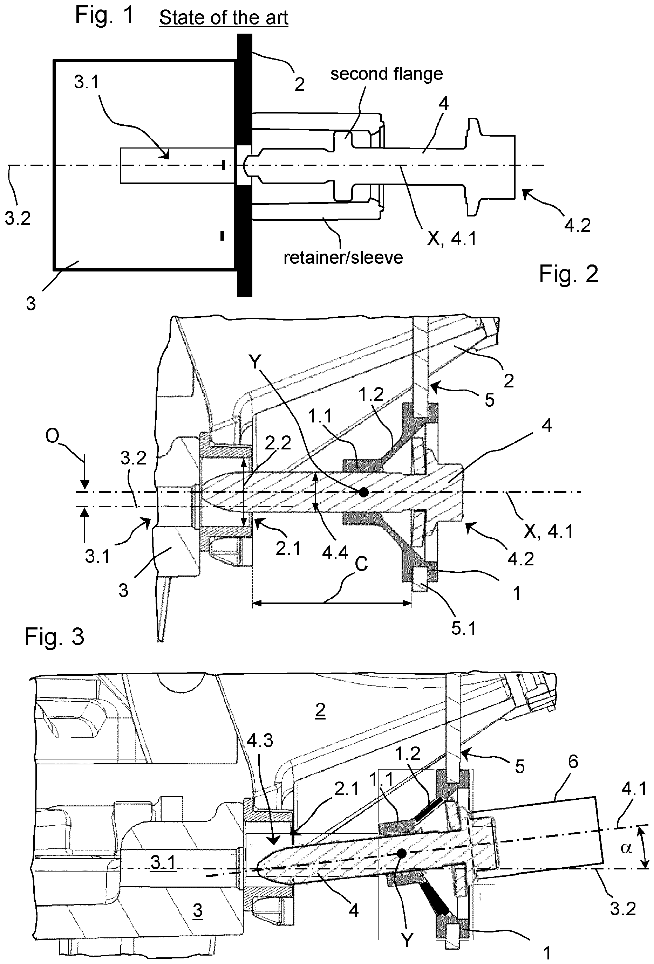

According to the current state of the art (see fig. 1), a sleeve and a bolt are pre-assembled at an add-on part. The sleeve is usually used to secure the bolt captive, into which the bolt is inserted and which is integrated into the screw connection. The two components are clamped using the sleeve against which the bolt rests with the bolt head. The sleeve is usually cast onto the add-on part and partially accommodates the bolt. According to common systems, the bolt is secured against falling out of the sleeve via a second flange of the bolt, which is positioned in the sleeve and serves also as a torque limiter. The second flange is guided in the sleeve and captive secured of the sleeve by a narrow inside collar on the sleeve.

DE 10 2009 050337 A1 describes a component unit for a fuel system of an internal combustion engine, in particular for use in an internal combustion engine with direct injection, with at least one fuel-injecting injector to which at least one fuel-injecting injector can be fixed, and with at least one fuel line by means of which the injector can be connected to a fuel distributor. It is provided that the injector is connected to the fuel line by means of a plug connection. Furthermore, at least one positioning aid is provided which holds the injector in a predetermined position (Figure 2). The description of DE 10 2011 053326 A1 relates to a motor vehicle with a permanently installed window. A disk is enclosed by a profile which has at least one screw protruding to the rear, wherein an associated screw opening is provided in a body component, to which a screw sleeve penetrating the screw opening and a nut locking it are fixed, wherein the screw sleeve is surrounded by a removable positioning sleeve which aligns the screw sleeve relative to the screw opening and thus positions the disk to the body component via the screw accommodated in the screw sleeve. This allows for easy alignment in the majority of cases, although in special cases the adjustment range can be extended by simply removing the positioning sleeve, thus enabling compensation of larger component tolerances.

The invention is based on the object of being able to use such a system for pre-assembling a bolt captive for constructions with assembly-related deviations and to accelerate the mounting process.

According to a first aspect of the invention, the object is solved by the feature that the retainer is deformable in such a way that the bolt can be pivoted from a pre-assembled position about a pivot axis Y into a position set at an angle α to the centre axis X and/or the bolt can be moved in an offset position parallel to the pre-assembled position. The movement in parallel is a movement of the bolt in radial direction to the centre axis X with the bolt axis being in parallel to the centre axis X. The centre axis X and the hole axis are orientated in parallel.

Deformable in the sense of the invention is an elastically and/or plastically deformable characteristic of the retainer, whereby the retainer can be deformed manually during assembly, in particular also during adjustment of the bolt. For the solution according to the invention, there are several ways in which the retainer moves in relation to the bolt. At least a part of the retainer is fixed to the bolt and moves together with the bolt and performs the same movement as the bolt during the adjustment of the bolt. It is also possible that the bolt moves relative to the retainer during the entire adjustment, with the retainer forming a kind of clip. The preferred retainer is made of plastic. Alternatively, a bendable material such as thin sheet metal or metal wire can be used. Another alternative with less plastically deformable characteristic is a brittle material for the retainer that the retainer breaks when the bolt is adjusted.

The component usually has a threaded hole with an internal thread for locking the bolt. The bolt itself is first passed through the opening of the add-on part for screwing into the threaded hole. In applications with assembly-related deviations, however, the bolt in its pre-assembled position is not aligned with the threaded hole of the component. The bolt axis is offset parallel to the threaded hole by several millimetres, so that the bolt cannot be screwed in from its pre-assembled position. For such applications, according to the invention, it is possible with an elastic retainer to bring the bolt out of its pre-assembled position into alignment with the threaded hole. By moving the bolt parallel to its pre-assembled position by the offset the misalignment between the centre axis X and the hole axis can be compensated. To do this, the bolt is pivoted about the pivot axis Y and the end, i.e. the pilot tip of the bolt is inserted into the threaded hole. The bolt is then brought into a parallel offset position in which the bolt axis is aligned with the thread axis and then screwed into the threated hole. In consequence this parallel offset position of the bolt exists relatively to the opening of the add-on part, too. It is also essential to the invention that, as the diameter of the opening of the add-on part increases, a correspondingly larger offset can be compensated for. A second flange on the bolt is generally omitted so that the bolt can be offset parallel in the opening of the add-on part. The relative positions of the bolt are to understand in relation to the bolt axis X, which is the centre axis of the bolt.

The direction to bring the bolt, respectively the bolt axis out of its pre-assembled position into alignment with the threaded hole is not restricted to a vertical direction as shown in the figures. It could be any direction to receive said bolts alignment. In contrast to a sleeve, the retainer for the bolt is not required for the screw connection. This means that it is not necessary to structurally integrate the retainer into the screw connection.

The simplicity of the retainer is advantageously achieved in this way that the retainer is elastically and/or plastically deformable and/or the retainer has a predetermined breaking point, each of that deformations in such a way that the retainer is stretched and/or tears open by pivoting the bolt about the pivot axis Y and/or moving the bolt in the axial direction of the bolt. Thereby the bolt comes off from the retainer. This means that the torn retainer is still attached to the receptacle and does not affect the screw connection. In case of a less elasticity of the retainer the bolt slips through the retainer due to a tear caused by the predetermined breaking point and can directly clamp the add-on part. This means that the retainer is not part of the final screw connection. The retainer is a monobloc retainer. The retainer could be made of soft or elastic material or rigid material with small thickness. The retainer could have a specific shape to achieve a deformation during the assembling.

Another advantage in terms of a simple structure is, that the retainer has a collar into which the bolt is inserted, whereby the collar is directly fixing the bolt and/or the collar is elastically connectable to a frame of a receptacle with an elastic element attached or moulded to the collar. There is at least one elastic element or there are several elastic elements, which are arranged at least partially in a radial direction or a conical direction to the bolt. The collar could have a predetermined breaking point. The predetermined breaking point tears open when the bolt is screwed in and releases the retainer. But the collar could have a higher elasticity avoiding any breaks during screwing the bolt.

Regarding easy adjustment, it is advantageous that the retainer is designed as a grommet, whereby the elastic element having a shape of a conical-shaped or disc-shaped or cylindrical-shaped membrane and the membrane is attachable to a frame of a receptacle. The conical-shaped design of the membrane allows the bolt to be easily aligned with the threaded hole. In case of a higher elasticity of the retainer, the membrane and the collar remain tearless. They just deform back to the original shape.

The retainer should place the bolt in a position to start moving the pilot tip of the bolt towards the threaded hole by pivoting it and should allow aligning it with the threaded hole. For this an elastic material is of advantage.

So, a further aspect of the invention is, that the diameter of the opening of the add-on part is at least 20%, preferably at least 100% larger than the diameter of the bolt. The larger the diameter of the hole, the larger the misalignments can be compensated by pivoting and offsetting the bolt.

It is advantageous regarding the arrangement of the retainer that a receptacle is assembled at the add-on part or is part of the add-on part and the retainer is attached to the receptacle and the retainer is positioned in the direction of the centre axis X at a clearance in front of the opening. The clearance can be adjusted depending on the construction features of the retainer, depending on the length of the bolt and the extent of the misalignment to be compensated.

For this purpose, it is particularly advantageous that the receptacle forms a frame with an inner diameter D enclosing the retainer, the inner diameter D being chosen to be large enough that a usual tool for turning the bolt can pass through the frame or that the bolt can be pivoted at least 20 ° and/or can be offset by a dimension of at least 50 % of the diameter of the bolt. As the inner diameter D of the frame increases, the inner diameter of the retainer can be made larger. As the inner diameter of the retainer increases, it becomes possible to compensate for larger deviations in the misalignment of the bolt to the threaded hole. The frame could have a circular shape for enclosing the retainer with a constant inner diameter or any other shape with different inner diameters.

It is advantageous for assembly purposes, that the receptacle is designed as a mountable part of the add-on part or the receptacle and the add-on part form a one-piece and material-identical component. The bolt and the retainer are pre-assembled at the add-on part.

In terms of easy assembly, it is an advantage that the bolt has a thread and a bolt head onto which a usual tool can be placed and when screwing the bolt into the component, the bolt head can be moved through the retainer, whereby the retainer remains attached to the receptacle. The bolt is preferably manually moved with a usual tool.

In relation to the adjustment of the bolt it is essential, that the geometry of the inner diameter of the opening is matched to the geometry and the diameter of the bolt in such a way that the bolt can be adjusted within the opening by an offset of at least 25%, preferably at least 50% and more preferably at least 100% of the inner diameter of the threated hole. This enables the bolt fixed and guided by the retainer to be adjusted from its pre-assembled and offset position in a radial direction and finally coaxially to the hole axis.

For the invention, it is not important whether the hole is in the add-on part or alternatively in the component and correspondingly the threaded hole is not in the component but in the add-on part. In accordance with the invention, the bolt is pre-assembled on the component that has the hole.

The axial direction, the radial direction, the circumferential direction (circumferentially) and the coaxial positions have a meaning in relation to the respective axis, i. g. the central axis X. An axial movement is also in relation to the respective axis a movement in axial direction. For the purposes of the invention, an axial movement is to be understood as meaning the same as a translational movement.

Advantageous methods for solving the problem are described in the claims.

### BRIEF DESCRIPTION OF THE DRAWINGS

Various aspects of the invention, including its features and advantages, will be readily understood from the example embodiments discussed in the following detailed description and the accompanying drawings, in which:
Figure 1 illustrates a system according to the state of the art;
Figure 2 illustrates a sectional view of step 1 of a connection with a system connecting an add-on part to a component with a misalignment of two axis;
Figure 3 a sectional view according to figure 2 illustrating step 2;
Figure 4, 6 a sectional view according to figure 2 illustrating step 3;
Figure 5, 7 illustrates a perspective view of step 3.

### DETAILED DESCRIPTION

A simplified embodiment of pre-assembling according to the prior art is shown in figure 1. The add-on part 2 is screwed or clamped to the component 3 through the screw connection with a bolt 4. The bolt 4 is pre-assembled in a special position to the add-on part 2 with a retainer fixed on the add-on part 2. For this purpose, the bolt 4 is positioned with its bolt axis 4.1 in alignment with a centre axis X of the retainer in the form of a sleeve. The sleeve is moulded onto or attached to the add-on part 2. The bolt 4 has a bolt head 4.2 and a second flange. The sleeve has an inward-facing collar that is smaller in diameter than the second flange so that the bolt is secured captive. After arranging the add-on part 2 and the component 3 to each other, the bolt 4 is simply screwed into a threaded hole 3.1 of the component 3. The sleeve is integrated in the connection of the add-on part 2 with the component 3 by the bolt 4. The bolt 4 has relatively little clearance in the sleeve in the radial direction. As a result, only a small offset (O) of a few tenths of a millimetre between bolt axis 4.1 and centre axis X is possible. It is not possible to move the bolt 4 several millimetres or centimetres in parallel in the event, that the bolt axis 4.1 is not aligned with the hole axis 3.2 of the threaded hole 3.1 after arranging the two components 2, 3 to each other.

Figures 2 to 7 illustrate the same embodiments of a system connecting an add-on part 2 to a component 3. Figure 2 shows an arrangement of the add-on part 2 and the component 3 in which the necessary alignment of the axis 4.1 of the pre-assembled bolt 4 to the hole axis 3.2 in the component 3 is not given. According to the invention an elastic retainer 1 is used, which makes it possible to move the bolt 4 from the pre-assembled position in parallel to a mounting position.

As shown in figure 2, the bolt 4 is arranged in a first step in the pre-assembled position with the bolt axis 4.1 coaxial with the centre axis X of the opening 2.1 in the add-on part 2. The end 4.3 of the bolt 4 is designed as a pilot tip tapering towards the end 4.3 of the bolt 4. The end 4.3 of the bolt is positioned in the pre-assembled position inside the opening 2.1. However, the centre axis X is not aligned with the hole axis 3.2 of the threaded hole in component 3. The offset O of the two axes of about 4 mm is shown accordingly with arrows. The retainer 1 fixes the bolt 4 in the pre-assembled position as shown.

The retainer 1 is a stand-alone component assembled indirectly at the add-on part 2. A receptacle 5 is attached to the add-on part 2 to receive the retainer 1. The retainer 1 is assembled on the receptacle 5 or the retainer 1 is directly over-molded on the receptacle 5. The retainer 1 has a collar 1.1 and a conical membrane 1.2, which could be moulded to the collar or be one piece with the collar. With the membrane 1.2 the retainer 1 is attached to a receptacle 5. For this purpose, the receptacle 5 forms a frame 5.1 into which the retainer 1 is inserted. The receptacle 5 is arranged in front of the add-on part 2 at a clearance C from the opening 2.1. The clearance C varies with the length of the bolt 4 and, if necessary, also with the amount of offset O. Once the add-on part 2 and the component 3 have been arranged to each other, the offset O is set.

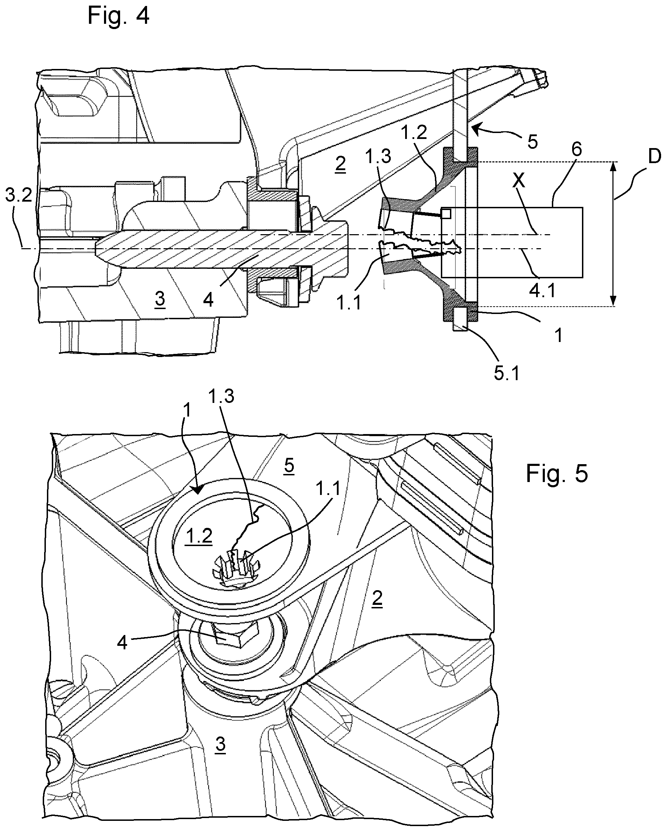

As shown in Figure 3, the bolt 4 is in a second step initially aligned around a pivot axis Y in the direction of the threaded hole 3.1. To do this, the bolt 4 is pivoted by an angle α. For this purpose, the bolt 4 has a pilot tip 4.3 that tapers continuously towards the end as an adjustment tool, which is inserted into the threaded hole 3.1. If necessary, the pivoting can be carried out using the tool 6 with which the bolt 4 is ultimately screwed. The bolt 4 is then aligned with the bolt axis 4.1 in line with the thread axis 3.2 and screwed into the threaded hole 3.1 using the tool 6 as shown in Figure 4. After inserting the bolt 4 into the threaded hole 3.1, the bolt 4 is aligned around an axis (not shown) in the area of the tip of the bolt 4 that is essentially parallel to the axis Y. This aligns the bolt 4, respectively the bolt axis 4.1 coaxially to the hole axis 3.2. This movement from the bolt 4 inside the opening 2.1 requires that the opening 2.1 has an inner diameter 2.2 which, according to this embodiment example, is at least twice larger than the offset O of the bolt 4 in its pre-assembled position. Basically, the inner diameter 2.2 of the opening 2.1 is at least 20%, preferably at least 100% larger than the diameter 4.4 of the bolt 4.

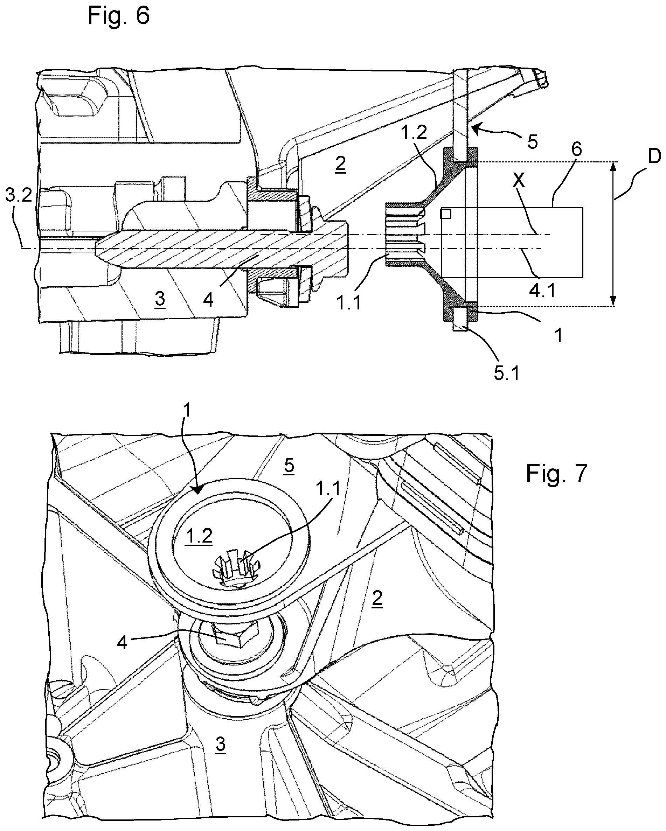

When the bolt 4 is screwed into the component 3, the membrane 1.2 and the collar 1.1 are stretched beyond the elastic yield point in such a way that the collar 1.1 and the membrane 1.2 tear open as shown in figures 4 and 5. The tearing creates a tear 1.3, which causes the bolt 4 to be released from the retainer 1. A predetermined breaking point not shown in detail is provided on collar 1.1 to precisely set the properties for tearing open the collar 1.1 and the membrane 1.2. Alternatively, as shown in figures 6 and 7, the membrane 1.2 and the collar 1.1 are just stretched to a point, where the bolt 4 is released. Due to its elasticity, the retainer 1 returns to the original shape.

The retainer 1 is fastened in the receptacle 5 in such a way that the retainer 1 is still fixed at the receptacle 5 after the retainer 1 is torn open. The two components 2, 3 are clamped with the bolt 4. So that the bolt 4 with its bolt head 4.2 and, depending on the type of assembly, also a usual screwing tool 6 can be guided through the frame 5.1, the diameter D of the frame 5.1 is dimensioned accordingly.

Figures 5 and 7 show a perspective view after the two components 2, 3 have been screwed. The bolt 4 is tightened. The tear 1.3 in the membrane 1.2 and in the collar 1.1 no longer gapes due to the elasticity of the retainer 1 as shown in figure 5. In case of a higher elasticity of the retainer, the membrane 1.2 and the collar 1.1 remain tearless as shown in figure 7. The bolt head 4.1 slips through collar 1.1. The membrane 1.2 and the collar 1.1 just deform back to its original shape.

For the sake of clarity, some components are not marked with reference numbers in every figure. However, same components are numbered always with the same reference number.

### List of references

- 1: retainer
- 1.1: collar
- 1.2: membrane, elastic element
- 1.3: tear
- 2: add-on part
- 2.1: opening
- 2.2: inner diameter
- 3: component
- 3.1: threaded hole
- 3.2: hole axis
- 4: bolt
- 4.1: bolt axis
- 4.2: bolt head
- 4.3: end, pilot tip
- 4.4: diameter bolt
- 5: receptacle
- 5.1: frame
- 6: tool

- α: angle
- C: clearance
- D: diameter
- O: offset
- X: centre axis
- Y: pivot axis

According to a first aspect of the invention, the object is solved by the feature that the retainer is elastically deformable in such a way that the bolt can be pivoted from a pre-assembled position about a pivot axis Y into a position set at an angle a thereto and/or the bolt can be moved in an offset position parallel to the pre-assembled position The component usually has a threaded hole with an internal thread for locking the bolt. The bolt itself is first passed through the bore of the add-on part for screwing into the threaded hole. In special applications, however, the bolt with its axis in its pre-assembled position is not aligned with the threaded hole of the component. The axis of the bolt is offset parallel to the threaded hole by several millimetres, so that the bolt cannot be screwed in from its pre-assembled position. For such applications, according to the invention, it is possible with an elastic retainer to bring the bolt with its axis out of its pre-assembled position into alignment with the threaded hole. With moving the bolt in parallel an offset to its pre-assembled position the misalignment between the central axis and the hole axis can be compensated. To do this, the bolt is pivoted about the pivot axis Y and the end of the bolt is inserted into the threaded hole. The bolt is then brought into a parallel, offset position in which the bolt axis is aligned with the thread axis and then screwed into the threated hole. In contrast to a sleeve, the retainer for the bolt is not required for the screw connection. This means that it is not necessary to structurally integrate the retainer into the screw connection.

It is advantageous regarding the arrangement of the retainer that a receptacle is assembled at the add-on part and the retainer is attached to the receptacle and the retainer is positioned in the direction of the central axis at a clearance in front of the bore. The clearance can be adjusted depending on the construction features of the retainer, depending on the length of the bolt and the extent of the misalignment to be compensated.

For this purpose, it is particularly advantageous that the receptacle forms a frame with a diameter_D enclosing the retainer, the diameter_D being chosen to be large enough that a usual tool for turning the bolt can pass through the frame. As the diameter_D of the frame increases, the diameter of the retainer can be made larger. As the diameter of the retainer increases, it becomes possible to compensate for larger deviations in the misalignment of the bolt to the threaded hole.

The simplicity of the retainer is advantageously achieved in this way that the retainer is elastically and plastically deformable and/or has a predetermined breaking point in such a way that the retainer tears open by pivoting the bolt about the axis Y and/or moving the bolt in the axial direction of the bolt. There-by the bolt comes off from the retainer. The bolt slips through the retainer due to a tear caused by the predetermined breaking point and can directly clamp the add-on part. This means that the retainer is not part of the final screw connection.

Another advantage in terms of a simple structure is, that the retainer has a collar into which the bolt is inserted, whereby the collar is directly fixing the bolt. The collar has the predetermined breaking point. The predetermined breaking point tears open when the bolt is screwed in and the retainer releases the bolt.

Regarding easy adjustment, it is advantageous that the retainer is designed as a grommet, whereby a conical-shaped membrane is moulded to the collar and the membrane is attached to the frame. This means that the torn retainer is still attached to the receptacle and does not affect the screw connection. The conical-shaped design of the membrane allows the bolt to be easily aligned with the threaded hole.

In terms of easy assembly, it is an advantage that the bolt has a thread and a bolt head onto which a usual tool can be placed and when screwing the bolt into the component, the bolt head can be moved through the retainer, whereby the retainer remains attached to the receptacle. The bolt is preferably moved with a usual tool.

So, a further aspect of the invention is, that the diameter of the bore of the add-on part is between 20% and 100% larger than the diameter of the bolt. The larger the diameter of the hole, the larger the misalignments can be compensated by moving the bolt.

It is advantageous for assembly purposes, that the receptacle is designed as a mountable part of the add-on part or the receptacle and the add-on part form a one-piece and material-identical component.

### BRIEF DESCRIPTION OF THE DRAWINGS

Various aspects of the invention, including its features and advantages, will be readily understood from the example embodiments discussed in the following detailed description and the accompanying drawings, in which:
Figure 1 illustrates a system according the state of the art;
Figure 2 illustrates a sectional view of step 1 of a connection with a system connecting an add-on part to a component with a misalignment of two axis;
Figure 3 illustrates step 2 according to figure 2;
Figure 4 illustrates step 3 according to figures 2 and 3 and
Figure 5 illustrates a perspective view of a mounted system.

### DETAILED DESCRIPTION

A simplified embodiment according to the prior art is shown in figure 1. The add-on part 2 is screwed or clamped to the component 3 through the screw connection with a bolt 4. As a preparatory measure, the bolt is pre-assembled in a special position on the add-on part 2. For this purpose, the bolt 4 is fixed with its axis 4.1 captive in alignment with the centre axis X of the bore 2.1 by a retainer in the form of a sleeve moulded onto or attached to the mounting part 2. The bolt 4 is secured in the sleeve with an adhesive, not shown. After arranging the add-on part 2 and the component 3 to each other, the bolt 4 is simply screwed into the threaded hole 3.1. When the add-on part 2 is fixed to the component 3 by the bolt 4, the sleeve is also integrated. But even if the sleeve is not involved in clamping the two components, the pre-assembly known from the prior art does not make it possible to move the bolt 4 in parallel in the event, that the axis 4.1 of the bolt 4 is not aligned with the hole axis 3.2 after arranging the two components 2, 3.

Figures 2 to 5 illustrate the same embodiments of a system connecting an add-on part 2 to a component 3. Figure 2 shows an arrangement of the add-on part 2 and the component 3 in which the necessary alignment of the axis 4.1 of the pre-assembled bolt 4 to the thread axis 3.2 in the component 3 is not given. Ac-cording to the invention an elastic retainer 1 is used, which makes it possible to move the bolt 4 from the pre-assembled position. As shown in figure 2, the bolt 4 is arranged in the pre-assembled position with its axis 4.1 coaxial with the central axis X of the bore 2.1 in the add-on part 2. However, the central axis X is not aligned with the hole axis 3.2 of the threaded hole in component 3. The offset O of the two axes is shown accordingly with arrows. The retainer 1 fixes the bolt 4 in the pre-assembled position shown. The retainer 1 has a collar 1.1 and a conical membrane 1.2 moulded to the collar. With the membrane 1.2 the retainer 1 is attached to a receptacle 5. For this purpose, the receptacle forms a frame 5.1 into which the retainer 1 is inserted. The receptacle 5 is arranged in front of the add-on part 2 at a clearance C from the bore 2.1. The clearance C varies with the length of the bolt 4 and, if necessary, also with the amount of offset O.

Once the add-on part 2 and the component 3 have been arranged to each other, the offset O is set. As shown in Figure 3, the bolt is now initially aligned around a pivot axis Y in the direction of the threaded hole 3.1. To do this, the bolt 4 is pivoted by an angle a. If necessary, the pivoting can be carried out using the tool 6 with which the bolt 4 is ultimately screwed. In the next step, the bolt 4 is aligned with its axis 4.1 in line with the thread axis 3.2 as shown in Figure 4 and screwed into the threaded hole 3.1 using the tool 6. When the bolt 4 is screwed into the component 3, the membrane 1.2 and the collar 1.1 are stretched beyond the elastic yield point in such a way that the collar 1.1 and the membrane 1.2 tear open. The tearing creates a tear 1.3, which causes the bolt 4 to be released from the retainer 1. A predetermined breaking point not shown in detail is provided on collar 1.1 to precisely set the properties for tearing open the collar 1.1 and the membrane 1.2.

The retainer 1 is fastened in the receptacle 5 in such a way that the retainer 1 is still fixed at the receptacle 5 after the retainer 1 is torn open. The two components 2, 3 are clamped with the bolt 4. So that the bolt 4 with its bolt head 4.2 and, depending on the type of assembly, also an usual screwing tool 6 can be guided through the frame 5.1, the diameter_D of the frame 5.1 is dimensioned accordingly.

Figure 5 shows a perspective view after the two components 2, 3 have been screwed. Bolt 4 is tightened. The tear 1.3 in the membrane 1.2 and in the col-lar 1.1 no longer gapes due to the elasticity of the retainer 1.

For the sake of clarity, some components are not marked with reference numbers in every figure. However, same components are numbered always with the same reference numbers.

## Claims

1. System for connecting an add-on part (2) to a component (3) and for pre-assembling the add-on part (2) captive, comprising a bolt (4) for connecting and a retainer (1) for captively fastening the bolt (4) in and/or in front of an opening (2.1) of the add-on part (2), wherein the bolt (4) with an bolt axis (4.1) is assembled with the retainer (1) in such a way that the bolt (4) is alignable in an essentially coaxial position with a centre axis X of the opening (2.1),
**characterized in that**
the retainer (1) is deformable in such a way that the bolt (4) can be pivoted from a pre-assembled position about a pivot axis Y into a position set at an angle α to the centre axis X and/or the bolt (4) can be moved in an offset (O) position parallel to the pre-assembled position.

2. System according to claim 1,
**characterized in that**
the retainer (1) is elastically and/or plastically deformable and/or the retainer (1) has a predetermined breaking point, each of those deformations in such a way that the retainer (1) is stretched and/or tears open by pivoting the bolt (4) about the pivot axis Y and/or moving the bolt (4) in the axial direction of the bolt (4).

3. System according to any one of the preceding claims,
**characterized in that** the retainer (1) has a collar (1.1) into which the bolt (4) is inserted, whereby the collar (1.1) is directly fixing the bolt (4) and/or the collar (1.1) is elastically connectable to a frame (5.1) of a receptacle (5) with an elastic element (1.2) attached or moulded to the collar (1.1).

4. System according to any one of the preceding claims,
**characterized in that** the retainer (1) is designed as a grommet, whereby the elastic element (1.2) having a shape of a conical-shaped or disc-shaped or cylindrical-shaped membrane (1.2) and the membrane (1.2) is attachable to a frame (5.1) of a receptacle (5).

5. System according to one of the preceding claims with an add-on part (2), wherein the inner diameter (2.2) of the opening (2.1) is at least 20%, preferably at least 100% larger than the diameter (4.4) of the bolt (4).

6. System according to claim, 5
**characterized in that** a receptacle (5) is assembled at the add-on part (2) or is part of the add-on part (2), wherein the retainer (1) is attached to the receptacle (5) and the retainer (1) is positioned in the direction of the centre axis X at a clearance (C) in front of the opening (2.1) or in the opening (2.1).

7. System according to claim 6,
**characterized in that**
the receptacle (5) forms a frame (5.1) with an inner diameter D enclosing the retainer (1), the inner diameter D being chosen to be large enough that a usual tool (6) for turning the bolt (4) can pass through the frame (5.1) or that the bolt can be pivoted at least 20 ° and/or can be offset (O) by a dimension of at least 50 % of its diameter (4.4).

8. System according to any one of the preceding claims 6 to 7, **characterized in that** the receptacle (5) is designed as a mountable part of the add-on part (2) or the receptacle (5) and the add-on part (2) form a one-piece and material-identical component.

9. System according to any one of the preceding claims 6 to 8, **characterized in that** the bolt (4) has a thread and a bolt head (4.2) onto which a usual tool (6) can be placed and when screwing the bolt (4) into the component (3), the bolt head (4.2) is movable through the retainer (1), whereby the retainer (1) remains attached to the receptacle (5).

10. System according to any one of the preceding claims,
**characterized in that** the geometry of the inner diameter (2.2) of the opening (2) is matched to the geometry and the diameter (4.4) of the bolt (4) in such a way that the bolt (4) can be adjusted within the opening by an offset (O) of at least 25%, preferably at least 50% and more preferably at least 100% of the inner diameter of the threated hole (3.1).

11. Method using a system according to one of the preceding claims for attaching an add-on part (2) with an opening (2.1) to a component (3) with a threaded hole (3.1), the two components (2, 3) being connected with the bolt (4) and the bolt (4) is arranged in a pre-assembled position, **characterized in that**
a) the bolt (4) is placed with respect to the bolt axis (4.1) by the retainer (1)
a1) essentially coaxially to the centre axis X at the opening (2.1) in front of the threaded hole (3.1) and
a2) with reference to at least partially to the bolt axis (4.1) with an offset (O) of not less than 0.5 mm from the hole axis (3.2) of the threaded hole (3.1);
b1) the bolt (4) is manually pivoted about the pivot axis (Y) and the end (4.3) of the bolt is interacted with the threaded hole 3.1 and/or
b2) the bolt (4) is manually aligned in coaxial position to the hole axis (3.2),
b3) thereby the bolt (4) with reference to the pre-assembled position was moved about the offset (O);
c) the bolt (4) is screwed into the threaded hole (3.1).

12. Method according to claim 10 whereby when screwing the bolt (4) into the threaded hole (3.1), the retainer (1) is stretched by the bolt head (4.2) or a tool (6) in such a way that the collar (1.1) and/or the membrane (1.2) of the retainer (1) tears open and the bolt (4) is disconnected from the retainer (1)

13. Method according to claim 10 whereby when screwing the bolt (4) into the threaded hole (3.1), the retainer (1) is stretched by the bolt head (4.2) or by a tool (6) in such a way that the collar (1.1) and/or the membrane (1.2) of the retainer (1)
a) tears open
b) releases the bolt due to its elasticity
and the bolt (4) is disconnected from the retainer (1).
